(19)

Europäisches
Patentamt
European
Patent Office
Office européen
des brevets

(11) **EP 4 597 094 A1**

(12) **EUROPEAN PATENT APPLICATION**
published in accordance with Art. 153(4) EPC

(43) Date of publication:
**06.08.2025 Bulletin 2025/32**

(21) Application number: **23871555.1**

(22) Date of filing: **18.08.2023**

(51) International Patent Classification (IPC):
***G01N 27/447*** (2006.01)

(52) Cooperative Patent Classification (CPC):
**G01N 27/447**

(86) International application number:
**PCT/JP2023/029824**

(87) International publication number:
**WO 2024/070313 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022159107**

(71) Applicant: **FUJIFILM Corporation
Tokyo 106-8620 (JP)**

(72) Inventors:
• **ISOZAKI, Naoto
  Ashigarakami-gun, Kanagawa 258-8538 (JP)**
• **ETO, Daisuke
  Ashigarakami-gun, Kanagawa 258-8538 (JP)**

(74) Representative: **Dehns Germany Partnerschaft
mbB
Theresienstraße 6-8
80333 München (DE)**

(54) **ELECTROPHORESIS DEVICE, CONTROL METHOD FOR ELECTROPHORESIS DEVICE, AND
CONTROL PROGRAM FOR ELECTROPHORESIS DEVICE**

(57)    An electrophoresis device includes a processor
configured to: execute first resistance value derivation
processing or second resistance value derivation processing of deriving an electric resistance value of a
branch channel between a pair of channel ends before
separating a sample, in which the first resistance value
derivation processing is processing of deriving the electric resistance value based on a measured value obtained by applying an application voltage for examination
to the pair of channel ends, and the second resistance
value derivation processing is processing of deriving the
electric resistance value based on a measured value
obtained by applying an application current for examination to the pair of channel ends; and control a voltage or a
current, which is applied to the pair of channel ends,
based on the electric resistance value derived by the first
resistance value derivation processing or the second
resistance value derivation processing.

FIG. 10

**Description**

Technical Field

The present disclosure relates to an electrophoresis device, a control method for an electrophoresis device, and a control program for an electrophoresis device.

Background Art

In the related art, an electrophoresis device using a microchannel chip has been known. For example, a technology is known in which a sample is concentrated by performing isotachophoresis as electrophoresis to form a concentration layer, and then switching from the isotachophoresis to capillary electrophoresis to separate a specific component contained in the concentration layer (for example, see JP2019-158520A).

SUMMARY OF THE INVENTION

Technical Problem

For example, a resistance value varies due to a subtle difference in a reagent state, and thus electrophoresis conditions may be changed. In addition, for example, in a case in which dimensions between the microchannels are different, the resistance value is different, and thus the electrophoresis conditions may be changed. In a case in which the electrophoresis conditions are changed in this way, the measurement accuracy may be decreased.

The present disclosure provides an electrophoresis device, a control method for an electrophoresis device, and a control program for an electrophoresis device, with which a change in electrophoresis conditions due to a reagent state or a variation between microchannels can be suppressed.

Solution to Problem

A first aspect of the present disclosure relates to an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device comprising: at least one processor, in which the processor is configured to: execute first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and control the voltage or the current, which is applied to the pair of channel ends, based on the electric resistance value derived by the first resistance value derivation processing or the second resistance value derivation processing.

According to a second aspect of the present disclosure, in the first aspect, the first resistance value derivation processing may be processing of applying the application voltage for examination to the pair of channel ends and acquiring, as the measured value, a measured current value of a current that flows between the pair of channel ends due to the application of the application voltage and a first measured voltage value that is a voltage generated at a branch point between the pair of channel ends due to the application of the application voltage, and deriving the electric resistance value based on a value of the application voltage for examination, the measured current value, and the first measured voltage value, and the second resistance value derivation processing may be processing of applying the application current for examination to the pair of channel ends and acquiring, as the measured value, a second measured voltage value of a voltage generated between the pair of channel ends due to the application of the application current and a third measured voltage value that is a voltage generated at the branch point between the pair of channel ends due to the application of the application current, and deriving the electric resistance value based on a value of the application current for examination, the second measured voltage value, and the third measured voltage value.

According to a third aspect of the present disclosure, in the first aspect, the first resistance value derivation processing may be processing of applying the application voltage for examination in sequence to a plurality of pairs of channel ends selected from among the channel ends, acquiring, as the measured value, a measured current value of a current that flows through each of the plurality of pairs of channel ends due to the application of the application voltage, and

deriving the electric resistance value based on a value of the application voltage for examination and the measured current value of each of the pairs of channel ends, and the second resistance value derivation processing may be processing of applying the application current for examination in sequence to a plurality of pairs of channel ends selected from among the channel ends, acquiring, as the measured value, a measured voltage value of a voltage generated at each of the plurality of pairs of channel ends due to the application of the application current, and deriving the electric resistance value based on a value of the application current for examination and the measured voltage value of each of the pairs of channel ends.

According to a fourth aspect of the present disclosure, in the first aspect, as an application voltage or an application current, which is applied to the pair of channel ends in a case of separating the sample, an application voltage for isotachophoresis or an application current for isotachophoresis in a case in which the sample is moved by isotachophoresis as the electrophoresis and an application voltage for capillary electrophoresis or an application current for capillary electrophoresis in a case in which the sample is moved by capillary electrophoresis as the electrophoresis may be used, and a value of the application voltage for examination or a value of the application current for examination may be 10% or less of a value of the application voltage for capillary electrophoresis or a value of the application current for capillary electrophoresis.

According to a fifth aspect of the present disclosure, in the first aspect, as an application time during which an application voltage or an application current is applied to the pair of channel ends in a case of separating the sample, an application time for isotachophoresis in a case in which the sample is moved by isotachophoresis as the electrophoresis and an application time for capillary electrophoresis in a case in which the sample is moved by the capillary electrophoresis as the electrophoresis may be used, and an application time during which the application voltage for examination or the application current for examination is applied may be 10% or less of the application time for capillary electrophoresis.

A sixth aspect of the present disclosure relates to a control method for an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device including a processor, the control method comprising: causing the processor to: execute first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and control the voltage or the current, which is applied to the pair of channel ends, based on the electric resistance value derived by the first resistance value derivation processing or the second resistance value derivation processing.

A seventh aspect of the present disclosure relates to a control program for an electrophoresis device, the program causing a computer to function as an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the control program comprising: executing first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and controlling the voltage or the current, which is applied to the pair of channel ends, based on the electric resistance value derived by the first resistance value derivation processing or the second resistance value derivation processing.

Advantageous Effects of Invention

According to the above-described aspects, the electrophoresis device, the control method for the electrophoresis device, and the control program for the electrophoresis device of the present disclosure can suppress the change in the electrophoresis conditions due to the reagent state or the variation between the microchannels.

BRIEF DESCRIPTION OF THE DRAWINGS

Fig. 1 is a schematic diagram showing an example of a configuration of a microchannel chip according to an exemplary embodiment.

Fig. 2 is a configuration diagram showing an example of a configuration of an electrophoresis device according to the exemplary embodiment.

Fig. 3 is a schematic diagram showing an example of the microchannel chip according to the exemplary embodiment.

Fig. 4 is a block diagram showing an example of a hardware configuration of a control device according to the exemplary embodiment.

Fig. 5 is a functional block diagram showing an example of a configuration of the control device according to the exemplary embodiment.

Fig. 6 is a diagram showing a specific example of the microchannel chip.

Fig. 7 is an example of an electrophoresis waveform in a case in which $\alpha$-fetoprotein, which is a tumor marker, is measured.

Fig. 8 is a flowchart showing an example of control processing executed by a processor according to the exemplary embodiment.

Fig. 9 is a diagram showing symbols and the like used in the exemplary embodiment.

Fig. 10 is a flowchart showing an example of resistance value derivation processing according to a first exemplary embodiment.

Fig. 11 is a flowchart showing an example of capillary electrophoresis application value derivation processing.

Fig. 12 is a flowchart showing an example of capillary electrophoresis control processing.

Fig. 13 is a flowchart showing an example of resistance value derivation processing according to a second exemplary embodiment.

Fig. 14 is a schematic diagram showing another example of the microchannel chip.

Fig. 15 is a schematic diagram showing still another example of the microchannel chip.

DESCRIPTION OF EMBODIMENTS

Hereinafter, with reference to the drawings, an embodiment for carrying out the technology of the present disclosure will be described in detail.

First, a method of measuring a sample using an electrophoresis device according to the present exemplary embodiment, which uses a microchannel chip, will be described. It should be noted that, hereinafter, an embodiment will be described in which a tumor marker is used as an example of the sample.

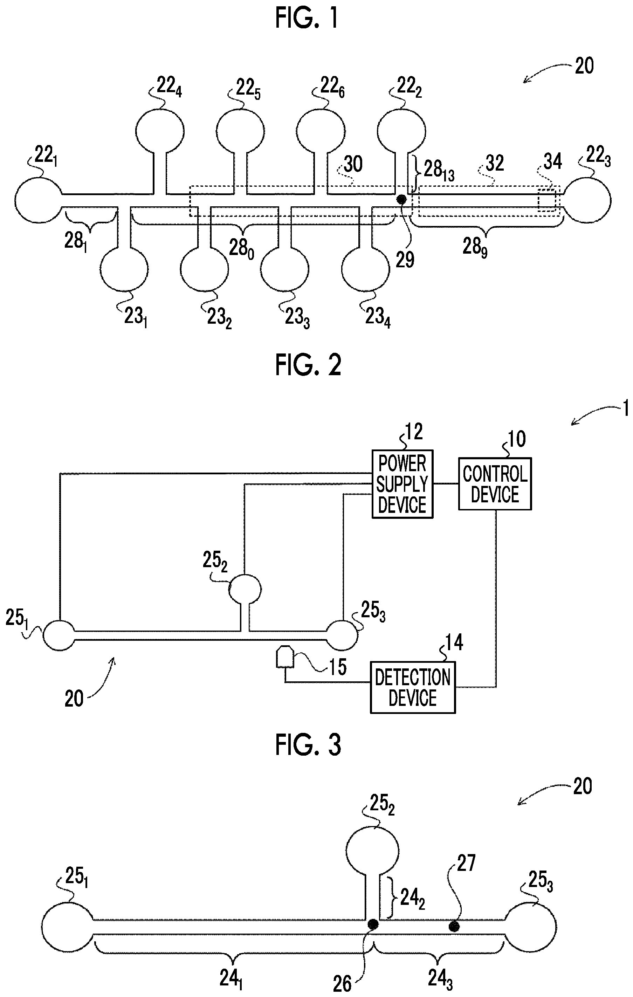

Fig. 1 schematically shows a channel in a microchannel chip 20 according to the present exemplary embodiment.

As shown in Fig. 1, the microchannel chip 20 according to the present exemplary embodiment comprises channel ends $22_1$ to $22_6$ and channel ends $23_1$ to $23_4$. Each of the channel ends $22_1$ to $22_6$ and the channel ends $23_1$ to $23_4$ is connected to a branch channel, and is connected to a main channel $28_0$ via the branch channel. The channel ends $22_1$ to $22_6$ are reagent introduction parts for introducing a reagent. Hereinafter, in a case in which the channel ends $22_1$ to $22_6$ are collectively referred to without distinction, the reference numerals 1 to 6 for distinguishing the individual channel ends will be omitted, and the channel ends will be collectively referred to as a "channel end 22".

The channel ends $22_1$, $22_2$, and $22_3$ are parts for introducing a buffer solution for electrophoresis. The channel end $22_4$ is a part for introducing a first labeled antibody solution (for example, a solution containing an antibody for a tumor marker labeled with DNA). The channel ends $22_5$ and $22_6$ are parts for introducing an immune reaction solution between the tumor marker, which is the sample, and a second labeled antibody solution (for example, a solution containing an antibody for a tumor marker labeled with fluorescence).

Electrodes (not shown) are disposed in a portion (in the present exemplary embodiment, the channel ends $22_1$ to $22_3$) of the channel ends $22_1$ to $22_6$. It should be noted that, in the present exemplary embodiment, a cathode is disposed at the channel end $22_1$ and $22_2$, and an anode is disposed at the channel end $22_3$. A migration channel is formed by the main channel $28_0$, a branch channel $28_1$ connected to the channel end $22_1$, a branch channel $28_{13}$ connected to the channel end $22_2$, and a branch channel $28_9$ connected to the channel end $22_3$.

The channel end $22_1$ and the channel end $22_3$ are connected to each other via the main channel $28_0$, the branch channel $28_1$, and the branch channel $28_9$. The channel end $22_2$ and the channel end $22_3$ are connected to each other via the branch channel $28_{13}$ and the branch channel $28_9$. In addition, the channel ends $22_4$ to $22_6$ are each connected to the main channel $28_0$ via the branch channels. A side of the channel end $22_1$ in the main channel $28_0$ will be referred to as an "upstream side", and a side of the channel end $22_3$ will be referred to as a "downstream side". For example, the channel ends $22_4$, $22_5$, $22_6$, and $22_2$ are disposed in order from the upstream side to the downstream side.

Meanwhile, the channel ends $23_1$ to $23_4$ are waste liquid storage parts for storing waste liquid. Hereinafter, in a case in which the channel ends $23_1$ to $23_4$ are collectively referred to without distinction, the reference numerals 1 to 4 for distinguishing the individual channel ends will be omitted, and the channel ends will be collectively referred to as a "channel end 23".

The channel end $23_1$ is a part (waste liquid reservoir) for storing a surplus portion of the buffer solution introduced from the channel end $22_1$ and a surplus portion of the first labeled antibody solution introduced from the channel end $22_4$. The channel end $23_2$ is a part (waste liquid reservoir) for storing a surplus portion of the first labeled antibody solution introduced from the channel end $22_4$ and a surplus portion of the immune reaction solution introduced from the channel end $22_5$. The channel end $23_3$ is a part (waste liquid reservoir) for storing a surplus portion of the immune reaction solution introduced from each of the channel ends $22_5$ and $22_6$. The channel end $23_4$ is a part (waste liquid reservoir) for storing a surplus portion of the immune reaction solution introduced from the channel end $22_6$ and a surplus portion of the buffer solution introduced from the channel ends $22_2$ and $22_3$.

The channel ends $23_1$ to $23_4$ are each connected to the main channel $28_0$ via the branch channels. The channel ends $23_1$, $23_2$, $23_3$, and $23_4$ are connected in order from the upstream side to the downstream side. More specifically, the channel end $23_1$ is disposed on the downstream side with respect to the channel end $22_1$ and the upstream side with respect to the channel end $22_4$. The channel end $23_2$ is disposed on the downstream side with respect to the channel end $22_4$ and the upstream side with respect to the channel end $22_5$. The channel end $23_3$ is disposed on the downstream side with respect to the channel end $22_5$ and the upstream side with respect to the channel end $22_6$. The channel end $23_4$ is connected to the downstream side with respect to the channel end $22_6$ and the upstream side with respect to the channel end $22_2$.

The migration channel according to the present exemplary embodiment has a sample concentration region 30 and a sample separation region 32 from the upstream side to the downstream side. The buffer solution for electrophoresis is introduced upstream of the sample concentration region 30. The sample concentration region 30 is a region for concentrating the tumor marker, which is the sample, by using an immune reaction and isotachophoresis (ITP), and is provided from a branch point between the main channel $28_0$ and the channel end $23_2$ to a branch point between the main channel $28_0$ and the channel end $22_2$ in the example shown in Fig. 1. In a case of performing the isotachophoresis, a voltage is applied between the channel end $22_1$ and the channel end $22_3$. The sample separation region 32 is a region for separating the tumor marker, which is the sample, from other components by using capillary electrophoresis (CE), more specifically, using capillary zone electrophoresis (CZE), and is provided from the channel end $22_2$ to the channel end $22_3$ in the example shown in Fig. 1. In a case of performing the capillary zone electrophoresis, the voltage is applied between the channel end $22_2$ and the channel end $22_3$.

The sample separation region 32 includes a detection region 34 that is provided on the downstream side and that detects the sample that has migrated through the migration channel.

In the microchannel chip 20 having the above-described configuration, an analysis of the tumor marker, which is the sample, can be performed as follows. After the introduction of each reagent, in a case in which the voltage is applied between the channel end $22_1$ and the channel end $22_3$, a first labeled antibody (antibody for the tumor marker labeled with DNA) introduced from the channel end $22_4$ moves from the main channel $28_0$ in a direction of the channel end $22_3$ in accordance with the principle of the isotachophoresis. In the sample concentration region 30, the first labeled antibody is concentrated, and an immune complex of the tumor marker, the first labeled antibody, and a second labeled antibody (antibody for the tumor marker labeled with fluorescence) is formed, whereby a concentration layer of the sample is formed. The concentration layer by the immune complex moves in a direction of the channel end $22_3$ and reaches the sample separation region 32. It should be noted that, since the unreacted (free) second labeled antibody does not have a charge in the molecule, the unreacted (free) second labeled antibody stays at the position and does not reach the sample separation region 32.

The switching of the electrode is performed in a case in which the immune complex of the tumor marker, the first labeled antibody, and the second labeled antibody reaches the sample separation region 32, more accurately, at the moment in which the immune complex reaches a slightly downstream side with respect to the branch point 29 of the branch channel $28_{13}$, and the voltage is applied between the channel end $22_2$ and the channel end $22_3$. The immune complex and the unreacted (free) first labeled antibody move in the sample separation region 32 in a direction of the channel end $22_3$ at respective movement speeds in accordance with the charge and the molecular size. Then, a concentration of the tumor marker can be measured from a peak area of a fluorescence intensity in a case in which the immune complex including the second labeled antibody having a fluorescent dye with the tumor marker as a core reaches the detection region 34. It should be noted that, since the unreacted first labeled antibody does not have the fluorescent dye in the molecule, the unreacted first labeled antibody does not affect the fluorescence intensity even in a case of reaching the detection region 34, and does not affect the measurement of the concentration of the tumor marker.

[First Exemplary Embodiment]

A configuration of an electrophoresis device 1 according to the present exemplary embodiment will be described with reference to Fig. 2. As shown in Fig. 2, the electrophoresis device 1 comprises a control device 10, a power supply device 12, a detection device 14, and a microchannel chip 20. The microchannel chip 20 shown in Figs. 2 and 3 comprises three channel ends 25 (first channel end $25_1$ to third channel end $25_3$) used in a case in which the voltage is applied in the isotachophoresis and the capillary electrophoresis. A first branch channel $24_1$ connected to the first channel end $25_1$, a second branch channel $24_2$ connected to the second channel end $25_2$, and a third branch channel $24_3$ connected to the third channel end $25_3$ are connected to each other by a branch point 26. The sample concentration region 30 is provided in the first branch channel $24_1$, and is used as a channel for sample concentration. In addition, the third branch channel $24_3$ is provided with the sample separation region 32 and the detection region 34, and is used as a channel for separating the sample and a channel for detecting the sample.

The power supply device 12 is a power supply for applying the voltage to each of the first channel end $25_1$ to the third channel end $25_3$ under the control of the control device 10. It should be noted that, specifically, the power supply device 12 applies the voltage to the electrodes (not shown) provided at each of the first channel end $25_1$ to the third channel end $25_3$, but, in the present exemplary embodiment, the power supply device 12 is simply referred to as "applying the voltage to the channel end 25" or the like.

The detection device 14 comprises a sensor 15. The sensor 15 is a sensor used for measuring the concentration of the tumor marker and for optically detecting the immune complex, and is disposed at a position facing a detection point 27 in the detection region 34 in the third branch channel $24_3$. The sensor 15 includes, for example, a laser diode (LD) or a light-emitting diode (LED) that emits excitation light. In this case, the fluorescence generated by the excitation with the excitation light emitted from the sensor 15 is received by a photodetector such as a photodiode (PD) or a photomultiplier tube (PMT). The detection device 14 outputs a detection signal corresponding to the fluorescence received as a detection result of the sensor 15 to the control device 10.

The control device 10 has a function of performing general control related to the electrophoresis. Specifically, the control device 10 performs control of the electrode to which the voltage is applied, control of the magnitude of the voltage or the current to be applied, and the like on the power supply device 12 based on the detection signal input from the detection device 14.

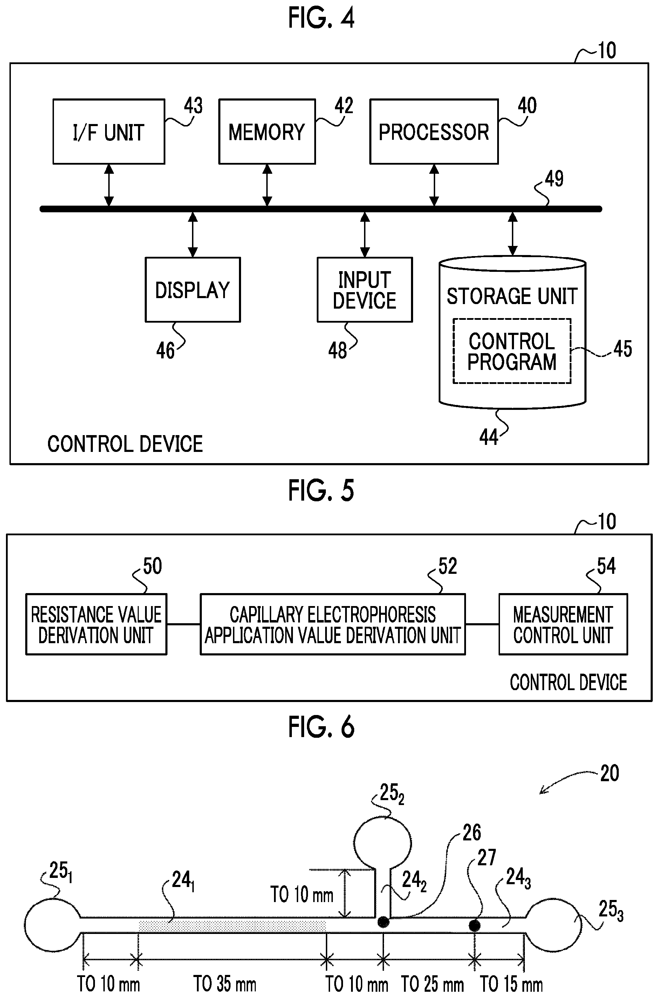

Fig. 4 is a block diagram showing an example of a hardware configuration of the control device 10. As shown in Fig. 4, the control device 10 comprises a processor 40 such as a central processing unit (CPU), a memory 42, an interface (I/F) unit 43, a storage unit 44, a display 46, and an input device 48. The processor 40, the memory 42, the I/F unit 43, the storage unit 44, the display 46, and the input device 48 are connected to each other via a bus 49, such as a system bus or a control bus, so that various types of information can be can be exchanged.

The processor 40 reads out various programs including a control program 45 stored in the storage unit 44, into the memory 42, and executes processing corresponding to the readout program. As a result, the processor 40 performs control related to the electrophoresis. The memory 42 is a work memory used in a case in which the processor 40 executes the processing.

The control program 45 executed in the processor 40 is stored in the storage unit 44. Specific examples of the storage unit 44 include a hard disk drive (HDD) and a solid-state drive (SSD).

The I/F unit 43 communicates various types of information between the power supply device 12 and the detection device 14 via wireless communication or wired communication. The display 46 and the input device 48 function as a user interface. The display 46 provides various types of information related to the analysis of the sample to a user. The display 46 is not particularly limited, and examples of the display 46 include a liquid-crystal monitor, and a light-emitting diode (LED) monitor. In addition, the input device 48 is operated by the user to input various instructions related to the projection of a projection image. The input device 48 is not particularly limited, and examples of the input device 48 include a keyboard, a touch pen, and a mouse. It should be noted that, in the control device 10, a touch panel display is employed in which the display 46 and the input device 48 are integrated.

Fig. 5 is a functional block diagram showing an example of a configuration related to the functions of the control device 10 according to the present exemplary embodiment. As shown in Fig. 5, the control device 10 comprises a resistance value derivation unit 50, a capillary electrophoresis application value derivation unit 52, and a measurement control unit 54. As an example, in the control device 10 according to the present exemplary embodiment, the processor 40 executes the control program 45 stored in the storage unit 44, so that the processor 40 functions as the resistance value derivation unit 50, the capillary electrophoresis application value derivation unit 52, and the measurement control unit 54.

The resistance value derivation unit 50 has a function of executing processing of deriving an electric resistance value (hereinafter, simply referred to as a "resistance value") of the branch channel 24 between a desired pair of channel ends 25 before separating the sample. As an example, the resistance value derivation unit 50 according to the present exemplary embodiment derives the resistance value of each of the second branch channel $24_2$ and the third branch channel $24_3$ between the pair of channel ends 25 (second channel end $25_2$ and third channel end $25_3$) to which the voltage is applied in the capillary electrophoresis. The resistance value derivation unit 50 outputs the derived resistance value to the capillary electrophoresis application value derivation unit 52.

As an example, in a case of a constant voltage load method, the resistance value derivation unit 50 according to the present exemplary embodiment applies an application voltage for examination to the pair of channel ends 25 (second channel end $25_2$ and third channel end $25_3$), and acquires, as the measured values, a measured current value of a current that flows between the pair of channel ends 25 (second channel end $25_2$ and third channel end $25_3$) due to the application of the application voltage, and a measured voltage value that is a voltage generated at the branch point 26 due to the application of the application voltage. Then, the resistance value derivation unit 50 derives the resistance value of each of the second branch channel $24_2$ and the third branch channel $24_3$ based on the value of the application voltage for examination, the measured current value, and the measured voltage value at the branch point 26. On the other hand, in a case of a constant current load method, the resistance value derivation unit 50 applies an application current for examination to the pair of channel ends 25 (second channel end $25_2$, third channel end $25_3$), and acquires, as the measured values, a measured voltage value of a voltage generated between the pair of channel ends 25 (second channel end $25_2$, third channel end $25_3$) due to the application of the application current, and a measured voltage value of a voltage generated at the branch point 26 due to the application of the application current. Then, the resistance value derivation unit 50 derives the resistance value of each of the second branch channel $24_2$ and the third branch channel $24_3$ based on the value of the application current for examination, the measured voltage value, and the measured voltage value at the branch point 26.

It should be noted that the application voltage for examination (hereinafter, referred to as an "examination voltage") and the application current for examination (hereinafter, referred to as an "examination current") have the magnitude that does not affect the actual measurement, and an application time thereof is a time that does not affect the actual measurement. The phrase "does not affect the actual measurement" means that the movement of the sample caused by the application of the examination voltage and the examination current is small enough to be negligible in the actual measurement, and that the Joule heat generated due to the application of the examination voltage or the examination current is small enough not to affect the sample.

Specific examples of the examination voltage and the examination current will be described using the microchannel chip 20 having the dimensions shown in Fig. 6. Fig. 6 shows a length of each of the first branch channel $24_1$ to the third branch channel $24_3$. It should be noted that a channel width of each branch channel 24 is 40 $\mu$m to 80 $\mu$m (here, a channel width of a hatched portion in the first branch channel $24_1$ is 150 $\mu$m or less), and a height of the channel is 30 $\mu$m or less.

In a case of executing the isotachophoresis, the voltage of 4000 V is applied between the first channel end $25_1$ and the third channel end $25_3$ for about 50 seconds to 100 seconds. In addition, in a case in which capillary electrophoresis is executed, the voltage of 1000 V to 2000 V is applied between the second channel end $25_2$ and the third channel end $25_3$ for about 20 seconds to 50 seconds. It should be noted that these specific numerical values are examples and vary depending on a device, a measurement item, and the like.

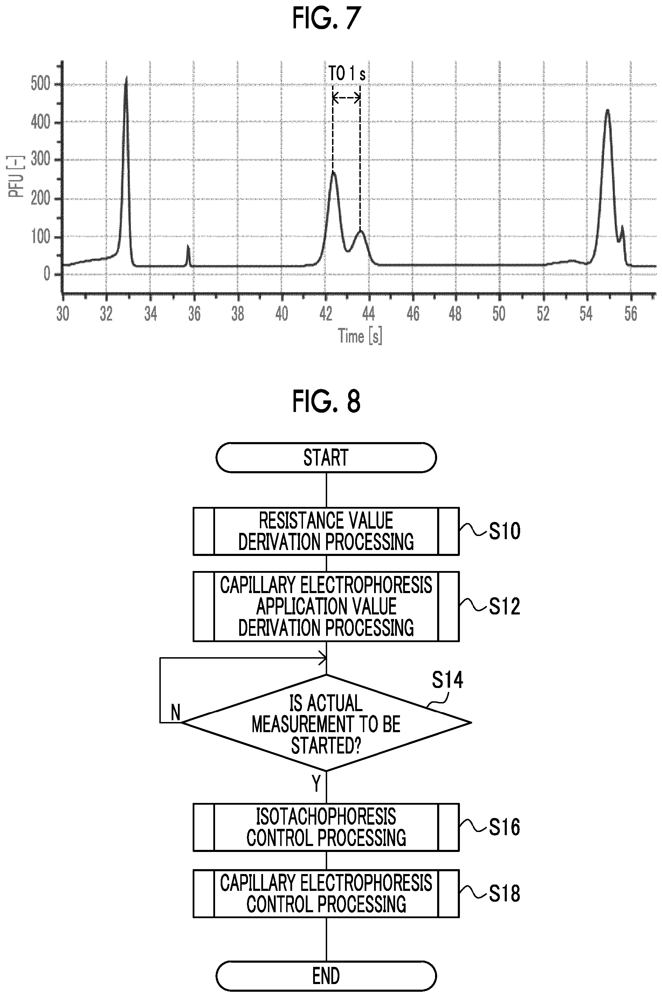

Fig. 7 shows an electrophoresis waveform in a case in which $\alpha$-fetoprotein, which is the tumor marker, is measured as the sample.

In a case in which the voltage of up to 1000 V is applied between the second channel end $25_2$ and the third channel end $25_3$, the sample moves between the branch point 26 and the detection point 27 (distance: 25 mm) in about 50 seconds. It should be noted that the electric field strength E, the sample moving speed v, and the sample electrophoretic mobility $\mu$ are as follows.

Electric field strength E = 20 V/mm
Sample moving speed v = 0.5 mm/s
Sample electrophoretic mobility $\mu$ = 0.025 mm$^2$/(V·s)

As shown in the electrophoresis waveform of Fig. 7, a time difference between the peaks is up to 1 second at minimum, and the actual measurement is affected in a case in which the peaks are shifted by about 0.5 seconds. It should be noted that, in a case in which the sample moving speed is set to 0.5 mm/s, the peak shift of 0.5 seconds is shifted by about 0.25 mm as a distance.

First, the influence of the Joule heat per unit time generated due to the application of the examination voltage is considered. The Joule heat per unit time is proportional to the square of the voltage. Therefore, in a case in which the examination voltage is set to 10% or less of the application voltage applied in the capillary electrophoresis, the Joule heat per unit time generated due to the application of the examination voltage can be suppressed to 1% or less of the Joule heat per unit time generated in the capillary electrophoresis, and the effect on the actual measurement can be reduced to a negligible level.

Further, a distance in which the sample move at 100 V (10% of the application voltage applied in the capillary electrophoresis) as the examination voltage will be considered. In this case, the sample moving speed is 0.05 mm/s. In a case in which the application time during which the examination voltage is applied is set to 5 seconds or less (10% or less of the application time in the capillary electrophoresis), the distance of the movement of the sample is 0.25 mm or less, and the effect on the actual measurement can be reduced to a negligible level.

Therefore, the magnitude of the examination voltage or the examination current is preferably 10% or less of the application voltage or the application current applied in the capillary electrophoresis. In addition, the application time of the examination voltage or the examination current is preferably 10% or less of the application time of the application voltage or the application current applied in the capillary electrophoresis.

In order to execute the capillary electrophoresis in actual measurement, the capillary electrophoresis application value derivation unit 52 derives a voltage value the application voltage or a current value of the application current, which is applied between the pair of channel ends 25 (second channel end $25_2$ and third channel end $25_3$) based on the resistance value of the branch channel 24 derived by the resistance value derivation unit 50. The capillary electrophoresis application value derivation unit 52 outputs the derived voltage value or current value to the measurement control unit 54.

In a case in which the capillary electrophoresis is executed, the measurement control unit 54 outputs an instruction to the power supply device 12 such that the voltage is applied between the pair of channel ends 25 (second channel end $25_2$ and third channel end $25_3$) based on the voltage value or the current value derived by the capillary electrophoresis application value derivation unit 52.

Next, the operation and effect of the control device 10 according to the present exemplary embodiment will be described. Fig. 8 is a flowchart showing an example of a flow of control processing executed by the processor 40 of the control device 10 according to the present exemplary embodiment. As an example, in the processor 40 according to the present exemplary embodiment, in a case in which an instruction to start the electrophoresis is received, the control processing shown in Fig. 8 as an example is executed.

In step S10 of Fig. 8, as described above, the resistance value derivation unit 50 derives the resistance values of the second branch channel $24_2$ and the third branch channel $24_3$ by resistance value derivation processing described in detail later.

In next step S12, the capillary electrophoresis application value derivation unit 52 derives the voltage value of the application voltage or the current value of the application current, which is applied between the pair of channel ends 25 (second channel end $25_2$ and third channel end $25_3$) based on the resistance value derived in step S10, by the capillary electrophoresis application value derivation processing described in detail later.

In next step S14, the measurement control unit 54 determines whether or not to start the actual measurement. Until the actual measurement is to be started, the determination result of the determination in step S14 is No. On the other hand, in a case in which the actual measurement is started, the determination result of the determination in step S14 is Yes, and the processing proceeds to step S16.

In step S16, the measurement control unit 54 executes isotachophoresis control processing. In the isotachophoresis control processing, the measurement control unit 54 applies a predetermined application voltage for isotachophoresis or a predetermined application current for isotachophoresis between the first channel end $25_1$ and the second channel end $25_2$ by the power supply device 12. By applying the application voltage for isotachophoresis or the application current for isotachophoresis in this way, the sample is concentrated as described above.

In next step S18, the measurement control unit 54 performs the capillary electrophoresis by applying the application voltage of the voltage value or the application current of the current value, which is derived in the step S12 as described above by the capillary electrophoresis control processing described later, to separate the sample. In a case in which step S18 ends, the control processing shown in Fig. 8 ends.

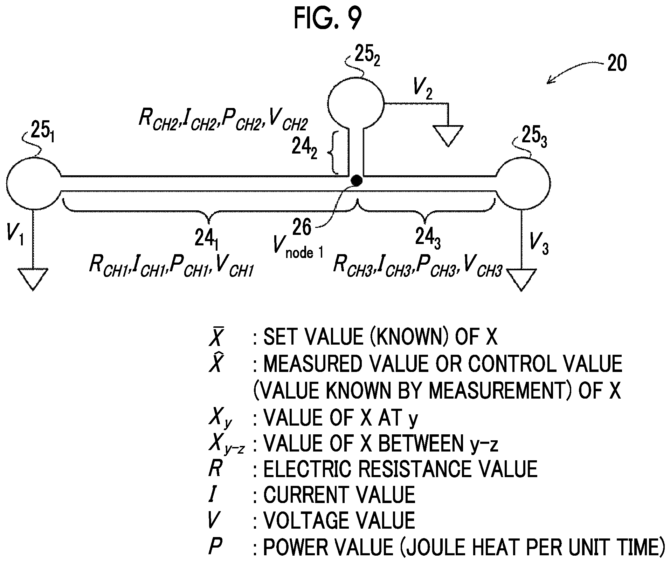

Next, the resistance value derivation processing of step S10, the capillary electrophoresis application value derivation processing of step S12, and the capillary electrophoresis control processing of step S18 in the above-described control processing will be described in detail. It should be noted that, hereinafter, symbols and reference numerals are used as shown in Fig. 9. For example, a set value (known) of X (X = V, I) is represented by $X^-$, and a measured value or a control value (value known by measurement) of X (X = V, I) is represented by $X^{\wedge}$.

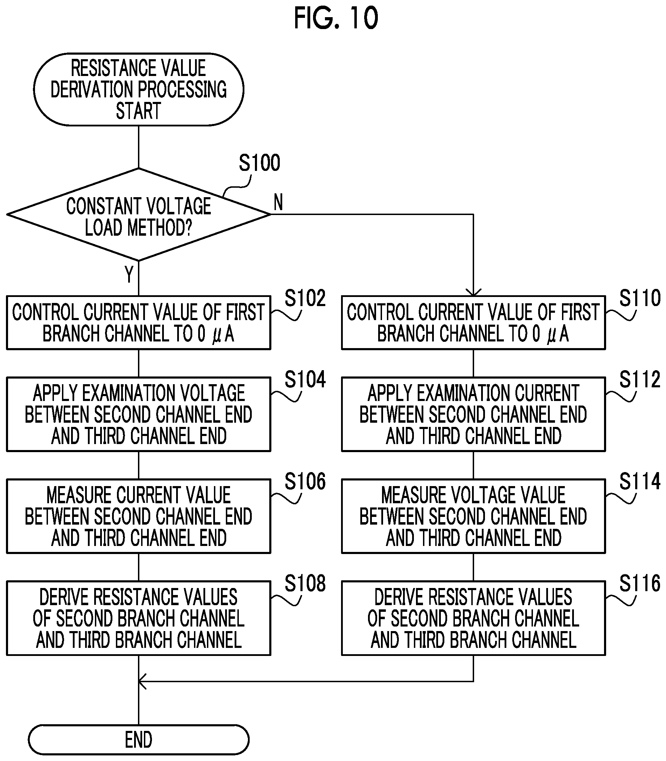

First, the resistance value derivation processing in step S10 in the control processing will be described. Fig. 10 shows a flowchart of an example of the resistance value derivation processing according to the present exemplary embodiment.

In step S100 of Fig. 10, the resistance value derivation unit 50 determines whether or not the constant voltage load method is used. In the present exemplary embodiment, there are the constant voltage load method of applying the examination voltage and the constant current load method of applying the examination current described above. Which of the method is to be performed may be determined in advance, or an embodiment may be adopted in which the method is to be performed is switched in accordance with an instruction of the user. In a case of the constant voltage load method, the determination result of the determination in step S100 is Yes, and the processing proceeds to step S102.

In step S102, the resistance value derivation unit 50 controls a current value $I^-_{CH1}$ of the branch channel $24_1$ (first branch channel) to 0 μA by the power supply device 12. As a result, a voltage value $V^{\wedge}_1$ of the first channel end $25_1$ and a voltage value $V^{\wedge}_{node1}$ of the branch point 26 are equal to each other.

In next step S104, the resistance value derivation unit 50 applies an examination voltage $V^-_{2-3}$ (= $V^-_2$ - $V^-_3$) between the second channel end $25_2$ and the third channel end $25_3$.

In next step S106, the resistance value derivation unit 50 measures a current value $I^{\wedge}_{2-3}$ (= $I^{\wedge}_{CH2}$ = $I^{\wedge}_{CH3}$) of the current between the second channel end $25_2$ and the third channel end $25_3$ by the power supply device 12. That is, the current value $I^{\wedge}_{2-3}$ of the current that flows due to the application of the examination voltage $V^-_{2-3}$ is measured.

In next step S108, the resistance value derivation unit 50 derives the resistance value of each of the second

branch channel $24_2$ and the third branch channel $24_3$. A resistance value $R_{CH2}$ of the second branch channel $24_2$ is derived by Expression (1), and a resistance value $R_{CH3}$ of the third branch channel $24_3$ is derived by Expression (2). It should be noted that, in Expressions (1) and (2), in the current, a direction in which a positive charge flows is positive, and the resistance value is not negative.

$$R_{CH2} = \frac{\bar{V}_2 - \hat{V}_1}{\hat{I}_{2-3}} \quad \cdots (1)$$

$$R_{CH3} = \frac{\hat{V}_1 - \bar{V}_3}{\hat{I}_{2-3}} \quad \cdots (2)$$

In a case in which the processing of step S108 ends, the resistance value derivation processing shown in Fig. 10 ends.

On the other hand, in a case of the constant current load method, the determination result of the determination in step S100 is No, and the processing proceeds to step S110.

In step S110, the resistance value derivation unit 50 controls the current value $I^{-}_{CH1}$ of the branch channel $24_1$ (first branch channel) to 0 $\mu$A by the power supply device 12, as in step S102. As a result, the voltage value $V^{\wedge}_1$ of the first channel end $25_1$ and the voltage value $V^{\wedge}_{node1}$ of the branch point 26 are equal to each other.

In next step S112, the resistance value derivation unit 50 applies an examination current $I^{-}_{2-3}$ (= $I^{-}_{CH2}$ = $I^{-}_{CH3}$) between the second channel end $25_2$ and the third channel end $25_3$.

In next step S114, the resistance value derivation unit 50 measures a voltage value $V^{\wedge}_{2-3}$ of the voltage generated between the second channel end $25_2$ and the third channel end $25_3$ by the power supply device 12. That is, the voltage value $V^{\wedge}_{2-3}$ of the voltage generated due to the application of the examination current $I^{-}_{2-3}$ is measured.

In next step S116, the resistance value derivation unit 50 derives the resistance value of each of the second branch channel $24_2$ and the third branch channel $24_3$. The resistance value $R_{CH2}$ of the second branch channel $24_2$ is derived by Expression (3), and the resistance value $R_{CH3}$ of the third branch channel $24_3$ is derived by Expression (4). It should be noted that, in Expression (4), the set value (known value) is used as the voltage value $V^{-}_3$ of the third channel end $25_3$. Even in a case of the constant current load method, a potential is not uniquely determined unless any potential is set. Therefore, as shown in Expression (4), the voltage value $V^{-}_3$ is set to the known value as the set value. It should be noted that the present disclosure is not limited to the present embodiment, and the voltage value $V^{-}_2$ of the second channel end $25_2$ may be set to the set value (known value).

$$R_{CH2} = \frac{\hat{V}_2 - \hat{V}_1}{\bar{I}_{2-3}} \quad \cdots (3)$$

$$R_{CH3} = \frac{\hat{V}_1 - \bar{V}_3}{\bar{I}_{2-3}} \quad \cdots (4)$$

In a case in which the processing of step S116 ends, the resistance value derivation processing shown in Fig. 10 ends.

As described above, the resistance values of the second branch channel $24_2$ and the third branch channel $24_3$ are derived by the resistance value derivation processing shown in Fig. 10.

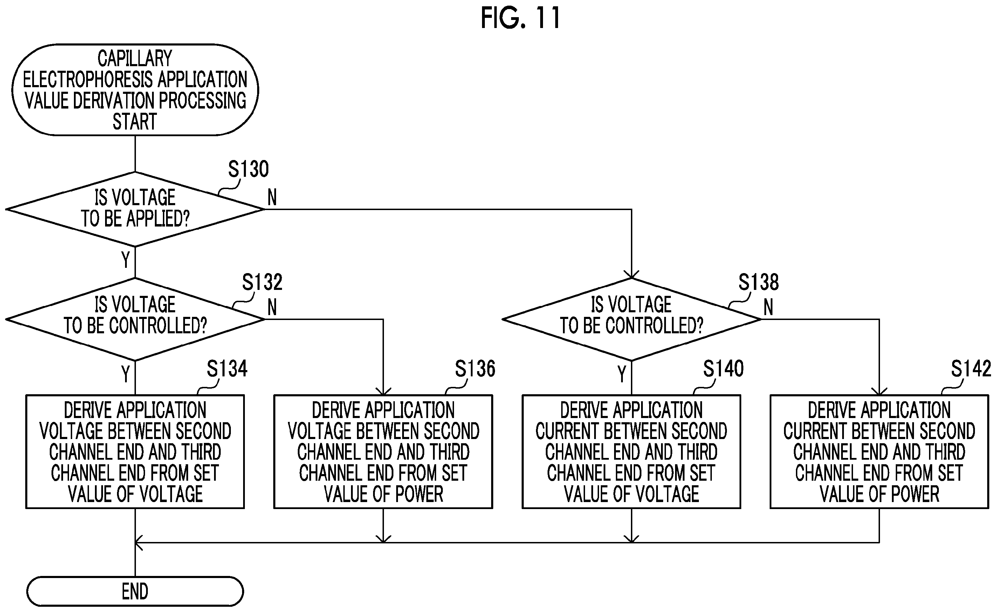

Next, the capillary electrophoresis application value derivation processing of step S12 in the above-described control processing will be described. Fig. 11 shows a flowchart of an example of the capillary electrophoresis application value derivation processing according to the present exemplary embodiment.

In step S130 of Fig. 11, the capillary electrophoresis application value derivation unit 52 determines whether or not a control target applied between the second channel end $25_2$ and the third channel end $25_3$ is the voltage. In a case in which the control target is the voltage, in other words, in a case in which the application voltage applied between the second channel end $25_2$ and the third channel end $25_3$ is controlled, the determination result of the determination in step S130 is Yes, and the processing proceeds to step S132.

In step S132, the capillary electrophoresis application value derivation unit 52 determines whether or not the control target to be controlled to a desired value is the voltage (voltage value). In the present exemplary embodiment, the voltage or the power is the control target. Therefore, in a case in which the voltage is controlled, the determination result of the determination in step S132 is Yes, and the processing proceeds to step S134.

In step S134, the capillary electrophoresis application value derivation unit 52 derives the voltage value $V_{2\text{-}3}$ of the application voltage applied between the second channel end $25_2$ and the third channel end $25_3$ from the set value (desired value) of the voltage $V^-_{CH3}$ of the third branch channel $24_3$ by Expression (5).

$$V_{2-3} = \left(1 + \frac{R_{CH2}}{R_{CH3}}\right)\bar{V}_{CH3} \quad \cdots (5)$$

In a case in which the processing of step S134 ends, the capillary electrophoresis application value derivation processing shown in Fig. 11 ends.

On the other hand, in step S132, in a case in which the control target of the desired value is the power (power value), the determination result of the determination in step S132 is No, and the processing proceeds to step S136. In step S136, the capillary electrophoresis application value derivation unit 52 derives the voltage value $V_{2\text{-}3}$ of the application voltage applied between the second channel end $25_2$ and the third channel end $25_3$ from the set value (desired value) of the power $P^-_{CH3}$ of the third branch channel $24_3$ by Expression (6).

$$V_{2-3} = \frac{R_{CH2} + R_{CH3}}{\sqrt{R_{CH3}}}\sqrt{\bar{P}_{CH3}} \quad \cdots (6)$$

In a case in which the processing of step S136 ends, the capillary electrophoresis application value derivation processing shown in Fig. 11 ends.

In addition, in step S 130, in a case in which the control target applied between the second channel end $25_2$ and the third channel end $25_3$ is not the voltage, in other words, in a case in which the application current applied between the second channel end $25_2$ and the third channel end $25_3$ is controlled, the determination result of the determination in step S130 is No, and the processing proceeds to step S138.

In step S138, the capillary electrophoresis application value derivation unit 52 determines whether or not the control target to be controlled to the desired value is the voltage (voltage value), in the same manner as in step S132. In a case in which the voltage is controlled, the determination result of the determination in step S138 is YES, and the processing proceeds to step S 140.

In step S140, the capillary electrophoresis application value derivation unit 52 derives a current value $I_{2\text{-}3}$ of the application current applied between the second channel end $25_2$ and the third channel end $25_3$ from the set value (desired value) of the voltage $V^-_{CH3}$ of the third branch channel $24_3$ by Expression (7).

$$I_{2-3} = \frac{\bar{V}_{CH3}}{R_{CH3}} \quad \cdots (7)$$

In a case in which the processing of step S140 ends, the capillary electrophoresis application value derivation processing shown in Fig. 11 ends.

On the other hand, in step S138, in a case in which the control target of the desired value is the power (power value), the determination result of the determination in step S138 is No, and the processing proceeds to step S142. In step S142, the capillary electrophoresis application value derivation unit 52 derives a current value $I_{2\text{-}3}$ of the application current applied between the second channel end $25_2$ and the third channel end $25_3$ from the set value (desired value) of the power $P^-_{CH3}$ of the third branch channel $24_3$ by Expression (8).

$$I_{2-3} = \sqrt{\frac{\bar{P}_{CH3}}{R_{CH3}}} \quad \cdots (8)$$

In a case in which the processing of step S142 ends, the capillary electrophoresis application value derivation processing shown in Fig. 11 ends.

As described above, by the capillary electrophoresis application value derivation processing shown in Fig. 11, the voltage value of the application voltage or the current value of the application current, which is applied between the second channel end $25_2$ and the third channel end $25_3$, in a case of the capillary electrophoresis in the actual measurement can be derived.

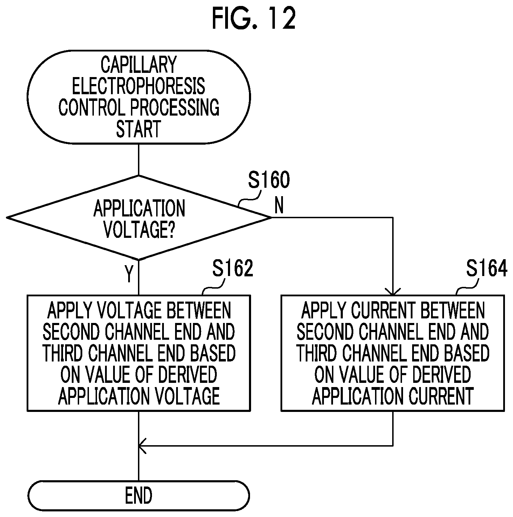

Next, the capillary electrophoresis control processing of step S18 in the above-described control processing will be described. Fig. 12 shows a flowchart of an example of the capillary electrophoresis control processing according to the present exemplary embodiment.

In step S160 of Fig. 12, the measurement control unit 54 determines whether or not to control the application voltage. In a case in which the application voltage is controlled, the determination result of the determination in step S160 is Yes, and the processing proceeds to step S162. In step S162, the measurement control unit 54 applies the voltage value $V_{2\text{-}3}$ of the application voltage, which is derived by the above-described capillary electrophoresis application value derivation processing (see Fig. 11), between the second channel end $25_2$ and the third channel end $25_3$. In a case in which the processing of step S162 ends, the capillary electrophoresis control processing shown in Fig. 12 ends.

On the other hand, in a case in which the application voltage is not controlled, in other words, in a case in which the application current is controlled, the determination result of the determination in step S160 is No, and the processing proceeds to step S164. In step S164, the measurement control unit 54 controls the current so that the current value $I_{2\text{-}3}$ of the application current derived by the above-described capillary electrophoresis application value derivation processing (see Fig. 11) flows between the second channel end $25_2$ and the third channel end $25_3$. In a case in which the processing of step S164 ends, the capillary electrophoresis control processing shown in Fig. 12 ends.

As described above, the control device 10 of the electrophoresis device 1 according to the present exemplary embodiment can derive the resistance values $R_{CH2}$ and $R_{CH3}$ of the second branch channel $24_2$ and the third branch channel $24_3$, which are the channels between the second channel end $25_2$ and the third channel end $25_3$ to which the application voltage or the application current is applied in the capillary electrophoresis. Accordingly, the control device 10 can derive the voltage value $V_{2\text{-}3}$ of the application voltage or the current value $I_{2\text{-}3}$ of the application current, which is applied to the pair of channel ends 25 (second channel end $25_2$ and third channel end $25_3$), based on the derived resistance values $R_{CH2}$ and $R_{CH3}$.

[Second Exemplary Embodiment]

In the present exemplary embodiment, another embodiment of the above-described resistance value derivation processing (see Fig. 10) will be described. It should be noted that, since the configuration of the control device 10 is the same as the configuration in the first exemplary embodiment, the description thereof will be omitted.

In the resistance value derivation processing according to the first exemplary embodiment, the potential $V_{node1}$ of the branch point 26 is monitored, but, in the present exemplary embodiment, the potential $V_{node1}$ of the branch point 26 is not monitored.

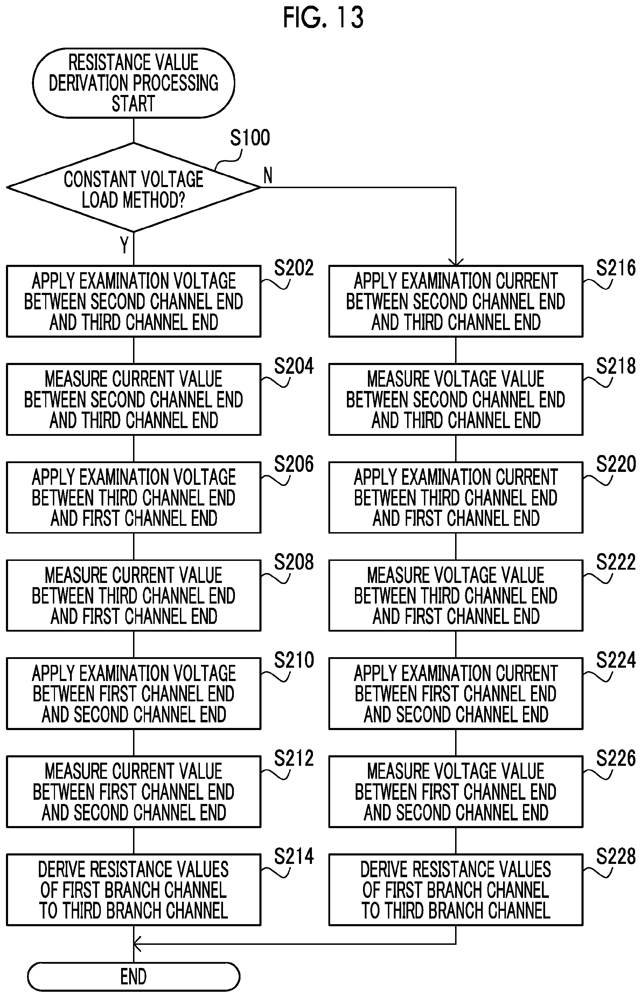

Fig. 13 shows a flowchart of an example of the resistance value derivation processing according to the present exemplary embodiment. In step S200 of Fig. 13, the resistance value derivation unit 50 determines whether or not the constant voltage load method is used, as in step S100 of the resistance value derivation processing (see Fig. 10) according to the first exemplary embodiment. In a case of the constant voltage load method, the determination result of the determination in step S200 is Yes, and the processing proceeds to step S202.

In step S202, the resistance value derivation unit 50 applies the examination voltage $V^-_{2\text{-}3}$ ($= V^-_2 - V^-_3$) between the second channel end $25_2$ and the third channel end $25_3$. It should be noted that the first channel end $25_1$ is disconnected from the power supply.

In next step S204, the resistance value derivation unit 50 measures the current value $I^\wedge_{2\text{-}3}$ ($= I^\wedge_{CH2} = I^\wedge_{CH3}$) of the current between the second channel end $25_2$ and the third channel end $25_3$ by the power supply device 12. That is, the current value $I^\wedge_{2\text{-}3}$ of the current that flows due to the application of the examination voltage $V^-_{2\text{-}3}$ is measured.

In next step S206, the resistance value derivation unit 50 applies an examination voltage $V^-_{3\text{-}1}$ ($= V^-_3 - V^-_1$) between the third channel end $25_3$ and the first channel end $25_1$. It should be noted that the second channel end $25_2$ is disconnected from the power supply.

In next step S208, the resistance value derivation unit 50 measures a current value $I^\wedge_{3\text{-}1}$ ($= I^\wedge_{CH3} = I^\wedge_{CH1}$) of the current between the third channel end $25_3$ and the first channel end $25_1$ by the power supply device 12. That is, the current value $I^\wedge_{3\text{-}1}$ of the current that flows due to the application of the examination voltage $V^-_{3\text{-}1}$ is measured.

In next step S210, the resistance value derivation unit 50 applies an examination voltage $V^-_{1\text{-}2}$ ($= V^-_1 - V^-_2$) between the first channel end $25_1$ and the second channel end $25_2$. It should be noted that the third channel end $25_3$ is disconnected from the power supply.

In next step S212, the resistance value derivation unit 50 measures a current value $I^\wedge_{1\text{-}2}$ ($= I^\wedge_{CH1} = I^\wedge_{CH2}$) of the current between the first channel end $25_1$ and the second channel end $25_2$ by the power supply device 12. That is, the current value $I^\wedge_{1\text{-}2}$ of the current that flows due to the application of the examination voltage $V^-_{1\text{-}2}$ is measured.

In next step S214, the resistance value derivation unit 50 derives a resistance value $R_{CH1}$ of the first branch channel $24_1$, a resistance value $R_{CH2}$ of the second branch channel $24_2$, and a resistance value $R_{CH3}$ of the third branch channel $24_3$ by solving the simultaneous equations of the following (9). It should be noted that, since all of the resistance value $R_{CH1}$, the resistance value $R_{CH2}$, and the resistance value $R_{CH3}$ are known values, the simultaneous equations of the following (9) can be solved.

$$\begin{cases} \bar{V}_{2-3} = \hat{I}_{2-3} \times (R_{CH2} + R_{CH3}) \\ \bar{V}_{3-1} = \hat{I}_{3-1} \times (R_{CH3} + R_{CH1}) \\ \bar{V}_{1-2} = \hat{I}_{1-2} \times (R_{CH1} + R_{CH2}) \end{cases} \quad \cdots (9)$$

It should be noted that only the resistance value $R_{CH2}$ of the second branch channel $24_2$ and the resistance value $R_{CH3}$ of the third branch channel $24_3$ may be derived.

In a case in which the processing of step S214 ends, the resistance value derivation processing shown in Fig. 13 ends.

On the other hand, in a case of the constant current load method, the determination result of the determination in step S200 is No, and the processing proceeds to step S216.

In step S216, the resistance value derivation unit 50 applies the examination current $I^{-}_{2-3}$ between the second channel end $25_2$ and the third channel end $25_3$. It should be noted that the first channel end $25_1$ is disconnected from the power supply.

In next step S218, the resistance value derivation unit 50 measures the voltage value $V^\wedge_{2-3}$ ($= V^\wedge_2 - V^\wedge_3$) of the voltage generated between the second channel end $25_2$ and the third channel end $25_3$ by the power supply device 12. That is, the voltage $V_3$ of the voltage generated due to the application of the examination current $I^{-}_{2-3}$ is measured.

In next step S220, the resistance value derivation unit 50 applies the examination current $I^{-}_{3-1}$ between the third channel end $25_3$ and the first channel end $25_1$. It should be noted that the second channel end $25_2$ is disconnected from the power supply.

In next step S222, the resistance value derivation unit 50 measures the voltage value $V^\wedge_{3-1}$ ($= V^\wedge_3 - V^\wedge_1$) of the voltage generated between the third channel end $25_3$ and the first channel end $25_1$ by the power supply device 12. That is, the voltage $V^\wedge_{3-1}$ of the voltage generated due to the application of the examination current $I^{-}_{3-1}$ is measured.

In next step S224, the resistance value derivation unit 50 applies the examination current $I^{-}_{1-2}$ between the first channel end $25_1$ and the second channel end $25_2$. It should be noted that the third channel end $25_3$ is disconnected from the power supply.

In next step S226, the resistance value derivation unit 50 measures the voltage value $V^\wedge_{1-2}$ ($= V^\wedge_1 - V^\wedge_2$) of the voltage generated between the first channel end $25_1$ and the second channel end $25_2$ by the power supply device 12. That is, the voltage $V^\wedge_{1-2}$ of the voltage generated due to the application of the examination current $I^{-}_{1-2}$ is measured.

In next step S228, the resistance value derivation unit 50 derives the resistance value $R_{CH1}$ of the first branch channel $24_1$, the resistance value $R_{CH2}$ of the second branch channel $24_2$, and the resistance value $R_{CH3}$ of the third branch channel $24_3$ by solving the simultaneous equations of the following (10). It should be noted that, since all of the resistance value $R_{CH1}$, the resistance value $R_{CH2}$, and the resistance value $R_{CH3}$ are known values, the simultaneous equations of the following (10) can be solved.

$$\begin{cases} \hat{V}_{2-3} = \bar{I}_{2-3} \times (R_{CH2} + R_{CH3}) \\ \hat{V}_{3-1} = \bar{I}_{3-1} \times (R_{CH3} + R_{CH1}) \\ \hat{V}_{1-2} = \bar{I}_{1-2} \times (R_{CH1} + R_{CH2}) \end{cases} \quad \cdots (10)$$

It should be noted that only the resistance value $R_{CH2}$ of the second branch channel $24_2$ and the resistance value $R_{CH3}$ of the third branch channel $24_3$ may be derived.

In a case in which the processing of step S228 ends, the resistance value derivation processing shown in Fig. 13 ends.

As described above, in the control device 10 according to the present exemplary embodiment, the resistance value $R_{CH2}$ of the second branch channel $24_2$ and the resistance value $R_{CH3}$ of the third branch channel $24_3$ can be derived, so that the voltage value $V_{2-3}$ of the application voltage or the current value $I_{2-3}$ of the application current, which is applied to the pair of channel ends 25 (the second channel end $25_2$ and the third channel end $25_3$), can be derived.

As described above, the control device 10 of the electrophoresis device 1 according to each of the above-described embodiments executes the resistance value derivation processing of deriving the electric resistance values of the second branch channel $24_2$ and the third branch channel $24_3$ of the pair of channel ends 25 (second channel end $25_2$ and third channel end $25_3$) before separating the sample, and derives the resistance value $R_{CH2}$ of the second branch channel $24_2$ and the resistance value $R_{CH3}$ of the third branch channel $24_3$. In addition, the control device 10 can derive the voltage value $V_{2-3}$ of the application voltage or the current value $I_{2-3}$ of the application current, which is applied to the pair of channel ends 25 (second channel end $25_2$ and third channel end $25_3$), based on the derived resistance value $R_{CH2}$ and resistance value $R_{CH3}$. The control device 10 controls the power supply device 12 so that the derived voltage value $V_{2-3}$ or

the current value $I_{2-3}$ of the application current is applied between the second channel end $25_2$ and the third channel end $25_3$.

Therefore, with the control device 10 according to each of the above-described embodiments, even in a case in which the electric resistance value of the branch channel 24 is changed due to the reagent state or the variation between the microchannels, it is possible to suppress the change in the electrophoresis conditions.

It should be noted that the microchannel chip 20 is not limited to the microchannel chip 20 described in the first and second exemplary embodiments. The microchannel chip 20 need only be a microchannel chip including a plurality of (three or more) channel ends, one or more branch points, and a plurality of branch channels that are branched at the branch points and connected to the respective channel ends, the microchannel chip being formed with a channel through which a sample moves via electrophoresis by applying a voltage or a current to a pair of channel ends selected from among the plurality of channel ends. For example, the microchannel chip 20 shown in Fig. 1 may be used.

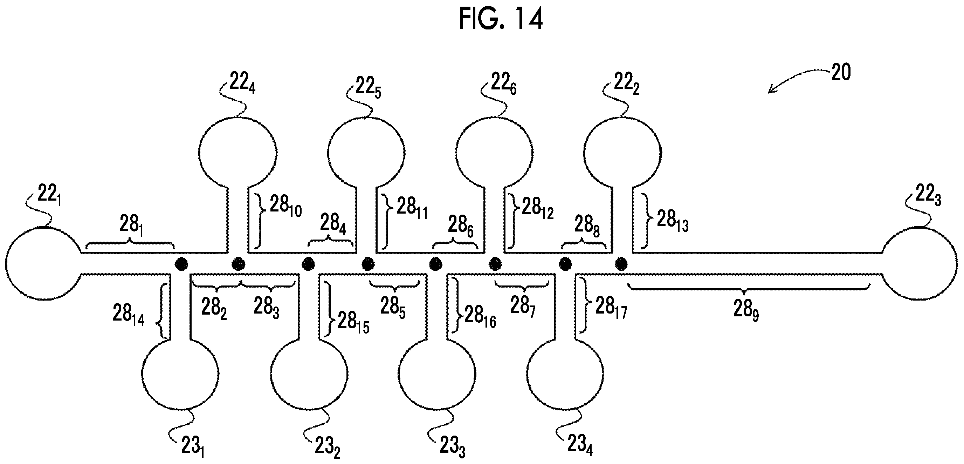

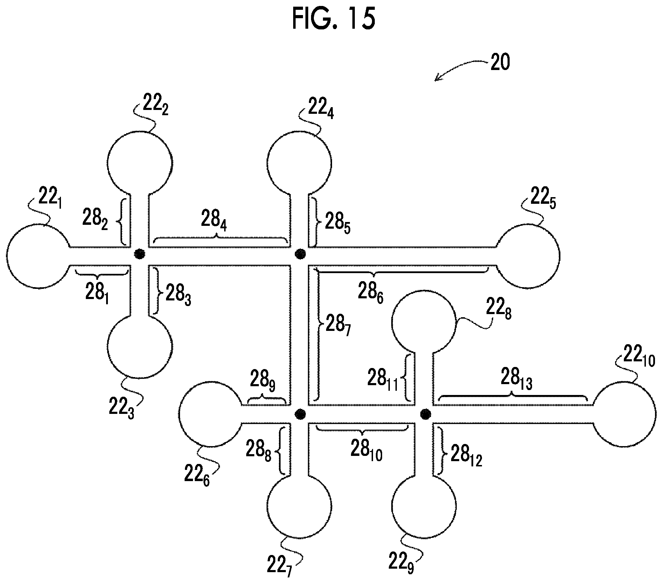

According to the present disclosure, the shape of the microchannel chip 20 is not limited to the shape shown in Figs. 1 and 3, and the resistance value of the branch channel can be derived even in the microchannel chip 20 having another shape as long as the shape of the channel is chain-like. For example, even in the microchannel chip 20 shown in Figs. 14 and 15, the resistance value of the branch channel can be derived.

For example, in the microchannel chip 20 shown in Fig. 14 (the same as the microchannel chip 20 in Fig. 1), resistance values $R_1$ to $R_{17}$ of branch channels $28_1$ to $28_{17}$ can be derived. In a case of the first exemplary embodiment, the resistance values $R_1$ to $R_9$ of the branch channels $28_1$ to $28_9$ can be derived by applying the examination voltage or the examination current between the channel end $22_1$ and the channel end $22_3$ and monitoring the potentials of the other channel ends 22 and 23. In addition, the resistance values $R_{10}$ and $R_{14}$ of the branch channel $28_{10}$ and the branch channel $28_{14}$ can be derived by applying the examination voltage or the examination current between the channel end $22_4$ and the channel end $23_1$ and monitoring the potentials of the other channel ends 22 and 23. In addition, the resistance values $R_{11}$ and $R_{15}$ of the branch channel $28_{11}$ and the branch channel $28_{15}$ can be derived by applying the examination voltage or the examination current between the channel end $22_5$ and the channel end $23_2$ and monitoring the potentials of the other channel ends 22 and 23. In addition, the resistance values $R_{12}$ and $R_{16}$ of the branch channel $28_{12}$ and the branch channel $28_{16}$ can be derived by applying the examination voltage or the examination current between the channel end $22_6$ and the channel end $23_3$ and monitoring the potentials of the other channel ends 22 and 23. In addition, the resistance values $R_{13}$ and $R_{17}$ of the branch channel $28_{13}$ and the branch channel $28_{17}$ can be derived by applying the examination voltage or the examination current between the channel end $22_2$ and the channel end $23_4$ and monitoring the potentials of the other channel ends 22 and 23.

On the other hand, in a case of the second exemplary embodiment, 17 simultaneous equations are obtained from the measured values obtained by applying the examination voltage or the examination current between the channel end $22_1$ and the channel end $22_3$, between the channel end $22_1$ and the channel end $22_4$, between the channel end $22_1$ and the channel end $22_5$, between the channel end $22_1$ and the channel end $22_6$, between the channel end $22_1$ and the channel end $22_2$, between the channel end $22_1$ and the channel end $23_1$, between the channel end $22_1$ and the channel end $23_2$, between the channel end $22_1$ and the channel end $23_3$, between the channel end $22_1$ and the channel end $23_4$, between the channel end $22_3$ and the channel end $22_4$, between the channel end $22_3$ and the channel end $22_5$, between the channel end $22_3$ and the channel end $22_6$, between the channel end $22_3$ and the channel end $22_2$, between the channel end $22_3$ and the channel end $23_1$, between the channel end $22_3$ and the channel end $23_2$, between the channel end $22_3$ and the channel end $23_3$, and between the channel end $22_3$ and the channel end $23_4$. By solving the 17 simultaneous equations, the resistance values $R_1$ to $R_{17}$ of the branch channels $28_1$ to $28_{17}$ can be derived.

In addition, for example, in the microchannel chip 20 shown in Fig. 15, the resistance values $R_1$ to $R_{13}$ of the branch channels $28_1$ to $28_{13}$ can be derived. In a case of the first exemplary embodiment, the resistance values $R_1$, $R_4$, $R_7$, $R_{10}$, and $R_{13}$ of the branch channel $28_1$, the branch channel $28_4$, the branch channel $28_7$, the branch channel $28_{10}$, and the branch channel $28_{13}$ can be derived by applying the examination voltage or the examination current between the channel end $22_1$ and the channel end $22_{10}$ and monitoring the potentials of the other channel ends 22. In addition, the resistance values $R_2$ and $R_3$ of the branch channel $28_2$ and the branch channel $28_3$ can be derived by applying the examination voltage or the examination current between the channel end $22_2$ and the channel end $22_3$ and monitoring the potentials of the other channel ends 22. In addition, the resistance values $R_5$ and $R_6$ of the branch channel $28_5$ and the branch channel $28_6$ can be derived by applying the examination voltage or the examination current between the channel end $22_4$ and the channel end $22_5$ and monitoring the potentials of the other channel ends 22. In addition, the resistance values $R_8$ and $R_9$ of the branch channel $28_8$ and the branch channel $28_9$ can be derived by applying the examination voltage or the examination current between the channel end $22_6$ and the channel end $22_7$ and monitoring the potentials of the other channel ends 22. In addition, the resistance values $R_{11}$ and $R_{12}$ of the branch channel $28_{11}$ and the branch channel $28_{12}$ can be derived by applying the examination voltage or the examination current between the channel end $22_8$ and the channel end $22_9$ and monitoring the potentials of the other channel ends 22.

On the other hand, in a case of the second exemplary embodiment, 13 simultaneous equations are obtained from the measured values obtained by applying the examination voltage or the examination current between the channel end

$22_1$ and the channel end $22_2$, between the channel end $22_1$ and the channel end $22_3$, between the channel end $22_1$ and the channel end $22_4$, between the channel end $22_1$ and the channel end $22_5$, between the channel end $22_1$ and the channel end $22_6$, between the channel end $22_1$ and the channel end $22_7$, between the channel end $22_1$ and the channel end $22_8$, between the channel end $22_1$ and the channel end $22_9$, between the channel end $22_1$ and the channel end $22_{10}$, between the channel end $22_2$ and the channel end $22_3$, between the channel end $22_4$ and the channel end $22_5$, between the channel end $22_6$ and the channel end $22_7$, and between the channel end $22_8$ and the channel end $22_9$. By solving the 13 simultaneous equations, the resistance values $R_1$ to $R_{13}$ of the branch channels $28_1$ to $28_{13}$ can be derived.

As described above, even in the microchannel chip 20 shown in Figs. 14 and 15, since the resistance value of the branch channel 28 can be derived, the application voltage applied between the pair of channel ends 22 can be derived using the same expressions as Expressions (5) and (6) based on Ohm's law. In addition, the application current applied between the pair of channel ends 22 can be derived using the same expressions as Expressions (7) and (8) based on Ohm's law. Accordingly, even in the microchannel chip 20 shown in Figs. 14 and 15, the voltage or the power applied to the branch channel 28 between the pair of channel ends 22 can be controlled.

It should be noted that, in the above-described embodiments, the embodiment has been described in which the application voltage for isotachophoresis or the application current for isotachophoresis is determined in advance (is a predetermined value), but an embodiment may be adopted in which the application voltage for isotachophoresis or the application current for isotachophoresis is derived based on the electric resistance value of the channel, as in the application voltage for capillary electrophoresis or the application current for capillary electrophoresis. For example, in a case of the microchannel chip 20 shown in Fig. 3, an embodiment may be adopted in which the resistance value of the first branch channel $24_1$ is derived, and the application voltage or the application current, which is applied between the first channel end $25_1$ and the third channel end $25_3$, is derived based on the resistance value of the first branch channel $24_1$. As described above, even in a case in which the resistance value of the first branch channel $24_1$ is changed due to the reagent state or the variation between the microchannels, the application voltage or the application current, which is applied between the first channel end $25_1$ and the third channel end $25_3$, can be set to a value corresponding to the resistance value of the first branch channel $24_1$. Therefore, it is possible to suppress the change in the electrophoresis conditions of the isotachophoresis.

In addition, the detection device 14 is not limited to an embodiment comprising the sensor 15 that optically detects the immune complex, and need only be in an embodiment corresponding to the sample or the like. For example, in a case in which magnetic particles are added to the sample instead of the fluorescent dye, the sensor 15 may be a sensor that magnetically detects the immune complex.

In addition, in each of the above-described embodiments, for example, as a hardware structure of a processing unit that executes various types of processing, such as the resistance value derivation unit 50, the capillary electrophoresis application value derivation unit 52, and the measurement control unit 54, various processors shown below can be used. As described above, in addition to the CPU that is a general-purpose processor that executes software (program) to function as various processing units, the various processors include a programmable logic device (PLD) that is a processor whose circuit configuration can be changed after manufacture, such as a field programmable gate array (FPGA), and a dedicated electric circuit that is a processor having a circuit configuration that is designed for exclusive use in order to execute specific processing, such as an application specific integrated circuit (ASIC).

One processing unit may be configured by one of the various processors or may be configured by a combination of two or more processors of the same type or different types (for example, a combination of a plurality of FPGAs or a combination of a CPU and an FPGA). A plurality of the processing units may be configured by one processor.

A first example of the configuration in which the plurality of processing units are configured by one processor is a form in which one processor is configured by a combination of one or more CPUs and the software and this processor functions as the plurality of processing units, as represented by computers such as a client and a server. A second example is a form of using a processor that implements the function of the entire system including the plurality of processing units via one integrated circuit (IC) chip, as represented by a system on a chip (SoC) or the like. In this manner, as the hardware structure, the various processing units are configured by using one or more of the various processors described above.

Further, the hardware structure of the various processors is, more specifically, an electric circuit (circuitry) in which circuit elements, such as semiconductor elements, are combined.

In addition, in each of the above-described exemplary embodiments, the aspect has been described in which the control program 45 is stored (installed) in the storage unit 44 in advance, but the present disclosure is not limited to this. The control program 45 may be provided in a form of being recorded on a recording medium, such as a compact disc read-only memory (CD-ROM), a digital versatile disc read-only memory (DVD-ROM), and a universal serial bus (USB) memory. In addition, the control program 45 may be provided in a form of being downloaded from an external device through a network. That is, the program (program product) described in the present exemplary embodiment may be distributed from an external computer, in addition to being provided using the recording medium.

In regard to the above-described exemplary embodiments, the following supplementary notes will be further disclosed.

(Supplementary Note 1)

An electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device comprising: at least one processor, in which the processor is configured to: execute first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and control the voltage or the current, which is applied to the pair of channel ends, based on the electric resistance value derived by the first resistance value derivation processing or the second resistance value derivation processing.

(Supplementary Note 2)

The electrophoresis device according to supplementary note 1, in which the first resistance value derivation processing is processing of applying the application voltage for examination to the pair of channel ends and acquiring, as the measured value, a measured current value of a current that flows between the pair of channel ends due to the application of the application voltage and a first measured voltage value that is a voltage generated at a branch point between the pair of channel ends due to the application of the application voltage, and deriving the electric resistance value based on a value of the application voltage for examination, the measured current value, and the first measured voltage value, and the second resistance value derivation processing is processing of applying the application current for examination to the pair of channel ends and acquiring, as the measured value, a second measured voltage value of a voltage generated between the pair of channel ends due to the application of the application current and a third measured voltage value that is a voltage generated at the branch point between the pair of channel ends due to the application of the application current, and deriving the electric resistance value based on a value of the application current for examination, the second measured voltage value, and the third measured voltage value.

(Supplementary Note 3)

The electrophoresis device according to supplementary note 1, in which the first resistance value derivation processing is processing of applying the application voltage for examination in sequence to a plurality of pairs of channel ends selected from among the channel ends, acquiring, as the measured value, a measured current value of a current that flows through each of the plurality of pairs of channel ends due to the application of the application voltage, and deriving the electric resistance value based on a value of the application voltage for examination and the measured current value of each of the pairs of channel ends, and the second resistance value derivation processing is processing of applying the application current for examination in sequence to a plurality of pairs of channel ends selected from among the channel ends, acquiring, as the measured value, a measured voltage value of a voltage generated at each of the plurality of pairs of channel ends due to the application of the application current, and deriving the electric resistance value based on a value of the application current for examination and the measured voltage value of each of the pairs of channel ends.

(Supplementary Note 4)

The electrophoresis device according to any one of supplementary notes 1 to 3, in which, as an application voltage or an application current, which is applied to the pair of channel ends in a case of separating the sample, an application voltage for isotachophoresis or an application current for isotachophoresis in a case in which the sample is moved by isotachophoresis as the electrophoresis and an application voltage for capillary electrophoresis or an application current for capillary electrophoresis in a case in which the sample is moved by capillary electrophoresis as the electrophoresis are used, and a value of the application voltage for examination or a value of the application current for examination is 10% or less of a value of the application voltage for capillary electrophoresis or a value of the application current for capillary electrophoresis.

(Supplementary Note 5)

The electrophoresis device according to any one of supplementary notes 1 to 4, in which, as an application time during which an application voltage or an application current is applied to the pair of channel ends in a case of separating the sample, an application time for isotachophoresis in a case in which the sample is moved by isotachophoresis as the electrophoresis and an application time for capillary electrophoresis in a case in which the sample is moved by the capillary electrophoresis as the electrophoresis are used, and an application time during which the application voltage for examination or the application current for examination is applied is 10% or less of the application time for capillary electrophoresis.

(Supplementary Note 6)

A control method for an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device including a processor, the control method comprising: causing the processor to: execute first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and control the voltage or the current, which is applied to the pair of channel ends, based on the electric resistance value derived by the first resistance value derivation processing or the second resistance value derivation processing.

(Supplementary Note 7)

A control program for an electrophoresis device, the program causing a computer to function as an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the control program comprising: executing first resistance value derivation processing or second resistance value derivation processing of deriving an electric resistance value of a branch channel between the pair of channel ends before separating the sample, in which the first resistance value derivation processing is processing of deriving the electric resistance value based on a measured value obtained by applying an application voltage for examination to the pair of channel ends, and the second resistance value derivation processing is processing of deriving the electric resistance value based on a measured value obtained by applying an application current for examination to the pair of channel ends; and controlling the voltage or the current, which is applied to the pair of channel ends, based on the electric resistance value derived by the first resistance value derivation processing or the second resistance value derivation processing.

The entire disclosure of Japanese Patent Application No. 2022-159107 filed on September 30, 2022 is incorporated into the present specification by reference.

All of the documents, the patent applications, and the technical standards described in the present specification are incorporated in the present specification by reference to the same extent as in a case in which each of the documents, the patent applications, and the technical standards are specifically and individually described to be incorporated by reference.

**Claims**

1. An electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device comprising:
   at least one processor, wherein the processor is configured to:

   execute first resistance value derivation processing or second resistance value derivation processing of deriving an electric resistance value of a branch channel between the pair of channel ends before separating the sample,

wherein the first resistance value derivation processing is processing of deriving the electric resistance value based on a measured value obtained by applying an application voltage for examination to the pair of channel ends, and

wherein the second resistance value derivation processing is processing of deriving the electric resistance value based on a measured value obtained by applying an application current for examination to the pair of channel ends; and

control the voltage or the current, which is applied to the pair of channel ends, based on the electric resistance value derived by the first resistance value derivation processing or the second resistance value derivation processing.

2. The electrophoresis device according to claim 1, wherein

the first resistance value derivation processing is processing of

applying the application voltage for examination to the pair of channel ends and acquiring, as the measured value, a measured current value of a current that flows between the pair of channel ends due to the application of the application voltage and a first measured voltage value that is a voltage generated at a branch point between the pair of channel ends due to the application of the application voltage, and deriving the electric resistance value based on a value of the application voltage for examination, the measured current value, and the first measured voltage value, and

the second resistance value derivation processing is processing of

applying the application current for examination to the pair of channel ends and acquiring, as the measured value, a second measured voltage value of a voltage generated between the pair of channel ends due to the application of the application current and a third measured voltage value that is a voltage generated at the branch point between the pair of channel ends due to the application of the application current, and deriving the electric resistance value based on a value of the application current for examination, the second measured voltage value, and the third measured voltage value.

3. The electrophoresis device according to claim 1, wherein:

the first resistance value derivation processing is processing of

applying the application voltage for examination in sequence to a plurality of pairs of channel ends selected from among the channel ends, acquiring, as the measured value, a measured current value of a current that flows through each of the plurality of pairs of channel ends due to the application of the application voltage, and deriving the electric resistance value based on a value of the application voltage for examination and the measured current value of each of the pairs of channel ends, and

the second resistance value derivation processing is processing of

applying the application current for examination in sequence to a plurality of pairs of channel ends selected from among the channel ends, acquiring, as the measured value, a measured voltage value of a voltage generated at each of the plurality of pairs of channel ends due to the application of the application current, and deriving the electric resistance value based on a value of the application current for examination and the measured voltage value of each of the pairs of channel ends.

4. The electrophoresis device according to claim 1, wherein:

as an application voltage or an application current, which is applied to the pair of channel ends in a case of separating the sample, an application voltage for isotachophoresis or an application current for isotachophoresis in a case in which the sample is moved by isotachophoresis as the electrophoresis and an application voltage for capillary electrophoresis or an application current for capillary electrophoresis in a case in which the sample is moved by capillary electrophoresis as the electrophoresis are used, and

a value of the application voltage for examination or a value of the application current for examination is 10% or less of a value of the application voltage for capillary electrophoresis or a value of the application current for capillary electrophoresis.

5. The electrophoresis device according to claim 1, wherein:

as an application time during which an application voltage or an application current is applied to the pair of channel ends in a case of separating the sample, an application time for isotachophoresis in a case in which the sample is moved by isotachophoresis as the electrophoresis and an application time for capillary electrophoresis in a case in which the sample is moved by the capillary electrophoresis as the electrophoresis are used, and an application time during which the application voltage for examination or the application current for examination is applied is 10% or less of the application time for capillary electrophoresis.

6. A control method for an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the electrophoresis device including a processor, the control method comprising: causing the processor to:

execute first resistance value derivation processing or second resistance value derivation processing of deriving an electric resistance value of a branch channel between the pair of channel ends before separating the sample,

wherein the first resistance value derivation processing is processing of deriving the electric resistance value based on a measured value obtained by applying an application voltage for examination to the pair of channel ends, and
wherein the second resistance value derivation processing is processing of deriving the electric resistance value based on a measured value obtained by applying an application current for examination to the pair of channel ends; and

control the voltage or the current, which is applied to the pair of channel ends, based on the electric resistance value derived by the first resistance value derivation processing or the second resistance value derivation processing.

7. A control program for an electrophoresis device, the program causing a computer to function as an electrophoresis device that separates a sample by using a microchannel chip including a plurality of (three or more) channel ends, one or more branch points, and a plurality of branch channel that are branched at the branch points and connected to the respective channel ends, the microchannel chip being formed with a channel through which the sample moves via electrophoresis by applying a voltage or a current to a pair of channel ends selected from among the plurality of channel ends, the control program comprising:

executing first resistance value derivation processing or second resistance value derivation processing of deriving an electric resistance value of a branch channel between the pair of channel ends before separating the sample,

wherein the first resistance value derivation processing is processing of deriving the electric resistance value based on a measured value obtained by applying an application voltage for examination to the pair of channel ends, and
wherein the second resistance value derivation processing is processing of deriving the electric resistance value based on a measured value obtained by applying an application current for examination to the pair of channel ends; and

controlling the voltage or the current, which is applied to the pair of channel ends, based on the electric resistance value derived by the first resistance value derivation processing or the second resistance value derivation processing.

# FIG. 1

# FIG. 2

# FIG. 3

## FIG. 4

~10

CONTROL DEVICE

I/F UNIT 43

MEMORY 42

PROCESSOR 40

49

DISPLAY 46

INPUT DEVICE 48

STORAGE UNIT

CONTROL PROGRAM 45

44

## FIG. 5

~10

RESISTANCE VALUE DERIVATION UNIT 50

CAPILLARY ELECTROPHORESIS APPLICATION VALUE DERIVATION UNIT 52

MEASUREMENT CONTROL UNIT 54

CONTROL DEVICE

## FIG. 6

20

$25_1$

$25_2$

$25_3$

$24_1$

$24_2$

$24_3$

26

27

TO 10 mm

TO 10 mm  TO 35 mm  TO 10 mm  TO 25 mm  TO 15 mm

# FIG. 7

# FIG. 8

# FIG. 9

$\overline{X}$ : SET VALUE (KNOWN) OF X

$\widehat{X}$ : MEASURED VALUE OR CONTROL VALUE
(VALUE KNOWN BY MEASUREMENT) OF X

$X_y$ : VALUE OF X AT y

$X_{y\text{-}z}$ : VALUE OF X BETWEEN y–z

$R$ : ELECTRIC RESISTANCE VALUE

$I$ : CURRENT VALUE

$V$ : VOLTAGE VALUE

$P$ : POWER VALUE (JOULE HEAT PER UNIT TIME)

# FIG. 10

RESISTANCE VALUE
DERIVATION PROCESSING
START

S100

CONSTANT VOLTAGE
LOAD METHOD?

Y

N

**S102**
CONTROL CURRENT VALUE OF FIRST
BRANCH CHANNEL TO 0 $\mu$A

**S104**
APPLY EXAMINATION VOLTAGE
BETWEEN SECOND CHANNEL END
AND THIRD CHANNEL END

**S106**
MEASURE CURRENT VALUE
BETWEEN SECOND CHANNEL END
AND THIRD CHANNEL END

**S108**
DERIVE RESISTANCE VALUES
OF SECOND BRANCH CHANNEL
AND THIRD BRANCH CHANNEL

**S110**
CONTROL CURRENT VALUE OF FIRST
BRANCH CHANNEL TO 0 $\mu$A

**S112**
APPLY EXAMINATION CURRENT
BETWEEN SECOND CHANNEL END
AND THIRD CHANNEL END

**S114**
MEASURE VOLTAGE VALUE
BETWEEN SECOND CHANNEL END
AND THIRD CHANNEL END

**S116**
DERIVE RESISTANCE VALUES
OF SECOND BRANCH CHANNEL
AND THIRD BRANCH CHANNEL

END

# FIG. 11

```
        CAPILLARY
ELECTROPHORESIS APPLICATION
VALUE DERIVATION PROCESSING
          START
```

S130
**IS VOLTAGE TO BE APPLIED?** — N →

Y ↓

S132
**IS VOLTAGE TO BE CONTROLLED?** — N →

Y ↓

S134
DERIVE APPLICATION VOLTAGE BETWEEN SECOND CHANNEL END AND THIRD CHANNEL END FROM SET VALUE OF VOLTAGE

S136
DERIVE APPLICATION VOLTAGE BETWEEN SECOND CHANNEL END AND THIRD CHANNEL END FROM SET VALUE OF POWER

S138
**IS VOLTAGE TO BE CONTROLLED?** — N →

Y ↓

S140
DERIVE APPLICATION CURRENT BETWEEN SECOND CHANNEL END AND THIRD CHANNEL END FROM SET VALUE OF VOLTAGE

S142
DERIVE APPLICATION CURRENT BETWEEN SECOND CHANNEL END AND THIRD CHANNEL END FROM SET VALUE OF POWER

END

EP 4 597 094 A1

FIG. 12

```
        ╭─────────────────────╮
        │      CAPILLARY       │
        │   ELECTROPHORESIS    │
        │ CONTROL PROCESSING   │
        │       START          │
        ╰─────────────────────╯
                  │
                  │            S160
              ◇───────────◇ ────────── N
             ╱ APPLICATION ╲
            ◇   VOLTAGE?     ◇
             ╲             ╱            │
              ◇───────────◇             │
                  │ Y       S162         │        S164
    ┌──────────────────────┐   ┌──────────────────────┐
    │  APPLY VOLTAGE BETWEEN│   │ APPLY CURRENT BETWEEN │
    │ SECOND CHANNEL END AND│   │ SECOND CHANNEL END AND│
    │ THIRD CHANNEL END BASED│  │ THIRD CHANNEL END BASED│
    │   ON VALUE OF DERIVED  │  │  ON VALUE OF DERIVED   │
    │  APPLICATION VOLTAGE   │  │  APPLICATION CURRENT   │
    └──────────────────────┘   └──────────────────────┘
                  │                       │
                  │◄──────────────────────┘
                  │
        ╭─────────────────────╮
        │         END          │
        ╰─────────────────────╯
```

# FIG. 13

```
   ┌─────────────────────────┐
   │    RESISTANCE VALUE     │
   │  DERIVATION PROCESSING  │
   │         START           │
   └─────────────────────────┘
              │
              │          S100
              ▼
         ╱──────────╲              N
      ╱   CONSTANT VOLTAGE ╲──────────────────────┐
      ╲   LOAD METHOD?     ╱                       │
         ╲──────────╱                              │
              │ Y                                  │
              ▼                                    ▼
┌──────────────────────────┐ S202  ┌──────────────────────────┐ S216
│  APPLY EXAMINATION       │       │  APPLY EXAMINATION       │
│  VOLTAGE BETWEEN SECOND  │       │  CURRENT BETWEEN SECOND  │
│  CHANNEL END AND THIRD   │       │  CHANNEL END AND THIRD   │
│  CHANNEL END             │       │  CHANNEL END             │
└──────────────────────────┘       └──────────────────────────┘
              │                                    │
              ▼                                    ▼
┌──────────────────────────┐ S204  ┌──────────────────────────┐ S218
│  MEASURE CURRENT VALUE   │       │  MEASURE VOLTAGE VALUE   │
│  BETWEEN SECOND CHANNEL  │       │  BETWEEN SECOND CHANNEL  │
│  END AND THIRD CHANNEL   │       │  END AND THIRD CHANNEL   │
│  END                     │       │  END                     │
└──────────────────────────┘       └──────────────────────────┘
              │                                    │
              ▼                                    ▼
┌──────────────────────────┐ S206  ┌──────────────────────────┐ S220
│  APPLY EXAMINATION       │       │  APPLY EXAMINATION       │
│  VOLTAGE BETWEEN THIRD   │       │  CURRENT BETWEEN THIRD   │
│  CHANNEL END AND FIRST   │       │  CHANNEL END AND FIRST   │
│  CHANNEL END             │       │  CHANNEL END             │
└──────────────────────────┘       └──────────────────────────┘
              │                                    │
              ▼                                    ▼
┌──────────────────────────┐ S208  ┌──────────────────────────┐ S222
│  MEASURE CURRENT VALUE   │       │  MEASURE VOLTAGE VALUE   │
│  BETWEEN THIRD CHANNEL    │       │  BETWEEN THIRD CHANNEL   │
│  END AND FIRST CHANNEL   │       │  END AND FIRST CHANNEL   │
│  END                     │       │  END                     │
└──────────────────────────┘       └──────────────────────────┘
              │                                    │
              ▼                                    ▼
┌──────────────────────────┐ S210  ┌──────────────────────────┐ S224
│  APPLY EXAMINATION       │       │  APPLY EXAMINATION       │
│  VOLTAGE BETWEEN FIRST   │       │  CURRENT BETWEEN FIRST   │
│  CHANNEL END AND SECOND  │       │  CHANNEL END AND SECOND  │
│  CHANNEL END             │       │  CHANNEL END             │
└──────────────────────────┘       └──────────────────────────┘
              │                                    │
              ▼                                    ▼
┌──────────────────────────┐ S212  ┌──────────────────────────┐ S226
│  MEASURE CURRENT VALUE   │       │  MEASURE VOLTAGE VALUE   │
│  BETWEEN FIRST CHANNEL   │       │  BETWEEN FIRST CHANNEL   │
│  END AND SECOND CHANNEL  │       │  END AND SECOND CHANNEL  │
│  END                     │       │  END                     │
└──────────────────────────┘       └──────────────────────────┘
              │                                    │
              ▼                                    ▼
┌──────────────────────────┐ S214  ┌──────────────────────────┐ S228
│  DERIVE RESISTANCE       │       │  DERIVE RESISTANCE       │
│  VALUES OF FIRST BRANCH  │       │  VALUES OF FIRST BRANCH  │
│  CHANNEL TO THIRD        │       │  CHANNEL TO THIRD        │
│  BRANCH CHANNEL          │       │  BRANCH CHANNEL          │
└──────────────────────────┘       └──────────────────────────┘
              │                                    │
              ◄────────────────────────────────────┘
              ▼
       ┌─────────────┐
       │     END     │
       └─────────────┘
```

FIG. 14

FIG. 15

## INTERNATIONAL SEARCH REPORT

International application No.

**PCT/JP2023/029824**

| A. | CLASSIFICATION OF SUBJECT MATTER |
|---|---|

*G01N 27/447*(2006.01)i
FI:    G01N27/447 331E; G01N27/447 335G

According to International Patent Classification (IPC) or to both national classification and IPC

| B. | FIELDS SEARCHED |
|---|---|

Minimum documentation searched (classification system followed by classification symbols)

G01N27/447

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); Scopus

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 6149787 A (CALIPER TECHNOLOGIES CORP.) 21 November 2000 (2000-11-21)<br>column 4, 4th paragraph, column 7, 5th paragraph, column 12, 2nd paragraph, column 19, 1st paragraph, column 20, 2nd and 3rd paragraphs, fig. 1, 3 | 1, 3-7 |
| Y | JP 2012-68234 A (ARKRAY, INC.) 05 April 2012 (2012-04-05)<br>paragraphs [0002], [0005]-[0007], [0031], [0035], [0050], [0051], [0063]-[0066], [0069]-[0070], fig. 2, 3 | 1-7 |
| Y | JP 2000-513813 A (CALIPER TECHNOLOGIES CORP.) 17 October 2000 (2000-10-17)<br>p. 16, 2nd and 3rd paragraphs, p. 18, 1st and 2nd paragraphs, p. 19, 1st to 4th paragraphs, p. 20, 2nd and 3rd paragraphs, p. 21, 3rd paragraph, fig. 1, 2, 4 | 1-2, 6-7 |
| Y | JP 2019-158520 A (FUJIFILM WAKO PURE CHEMICAL CORP.) 19 September 2019 (2019-09-19)<br>paragraph [0037] | 4-5 |
| Y | JP 2006-317357 A (SHIMADZU CORP.) 24 November 2006 (2006-11-24)<br>paragraph [0027] | 4-5 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/029824**

### C. DOCUMENTS CONSIDERED TO BE RELEVANT

| Category* | Citation of document, with indication, where appropriate, of the relevant passages | Relevant to claim No. |
|---|---|---|
| Y | KANIANSKY, D. et al. Column switching in zone electrophoresis on a chip. Journal of Chromatography A, 2004, vol. 1051, pp. 33-42, doi:10.1016/j.chroma.2004.08.065<br>p. 39, right column, 2nd paragraph, fig. 3 | 4-5 |
| Y | JP 2003-344356 A (HITACHI HIGH-TECHNOLOGIES CORP.) 03 December 2003 (2003-12-03)<br>paragraphs [0003], [0004], [0020], [0025], [0026], [0028] | 4-5 |
| A | US 5958694 A (CALIPER TECHNOLOGIES CORP.) 28 September 1999 (1999-09-28)<br>column 12, 4th paragraph | 1-7 |
| A | JP 2020-529619 A (PURIGEN BIOSYSTEMS, INC.) 08 October 2020 (2020-10-08)<br>paragraph [0678] | 1-7 |

Form PCT/ISA/210 (second sheet) (January 2015)

**EP 4 597 094 A1**

## INTERNATIONAL SEARCH REPORT
Information on patent family members

International application No.

**PCT/JP2023/029824**

| Patent document cited in search report | | | Publication date (day/month/year) | Patent family member(s) | | | Publication date (day/month/year) |
|---|---|---|---|---|---|---|---|
| US | 6149787 | A | 21 November 2000 | US | 6447661 | B1 | |
| | | | | WO | 2000/021666 | A1 | |
| JP | 2012-68234 | A | 05 April 2012 | US | 2012/0037508 | A1 | |
| | | | | paragraphs [0003], [0005]-[0007], [0037], [0041], [0056], [0057], [0069]-[0072], [0075], [0076], fig. 2, 3 | | | |
| | | | | EP | 2418480 | A2 | |
| | | | | CN | 102401811 | A | |
| JP | 2000-513813 | A | 17 October 2000 | US | 5800690 | A | |
| | | | | column 3, 3rd paragraph to column 4, 1st paragraph, column 4, 5th paragraph to column 6, 1st paragraph, column 6, 3rd and 4th paragraphs, column 7, 2nd paragraph, fig. 1, 2, 4 | | | |
| | | | | WO | 1998/000707 | A1 | |
| | | | | EP | 1241472 | A2 | |
| | | | | CN | 1224498 | A | |
| JP | 2019-158520 | A | 19 September 2019 | (Family: none) | | | |
| JP | 2006-317357 | A | 24 November 2006 | US | 2006/0254915 | A1 | |
| | | | | paragraph [0044] | | | |
| JP | 2003-344356 | A | 03 December 2003 | US | 2004/0018638 | A1 | |
| | | | | paragraphs [0003], [0004], [0030], [0040], [0041], [0044] | | | |
| | | | | EP | 1367388 | A1 | |
| US | 5958694 | A | 28 September 1999 | US | 2002/0048768 | A1 | |
| | | | | WO | 1999/019516 | A1 | |
| JP | 2020-529619 | A | 08 October 2020 | US | 2019/0071661 | A1 | |
| | | | | paragraph [0843] | | | |
| | | | | WO | 2019/028197 | A1 | |
| | | | | CN | 111432919 | A | |

Form PCT/ISA/210 (patent family annex) (January 2015)

**REFERENCES CITED IN THE DESCRIPTION**

**Patent documents cited in the description**

- JP 2019158520 A

- JP 2022159107 A